# EUROPÄISCHE PATENTSCHRIFT

(11) **EP 0 724 988 B1**
(45) Veröffentlichungstag und Bekanntmachung des Hinweises auf die Patenterteilung: **22.03.2000**
(21) Anmeldenummer: 95119404.2
(22) Anmeldetag: 08.12.1995
(51) Int. Cl.: B60R 25/00

(54) **Sicherheitseinrichtung für Kraftfahrzeuge**
Anti-theft device for motor vehicles
Dispositif anti-vol pour véhicules automobiles

(30) Priorität: 03.02.1995 DE 19503592
(43) Veröffentlichungstag der Anmeldung: 07.08.1996
(73) Patentinhaber: Bayerische Motoren Werke Aktiengesellschaft, 80788 München (DE)
(72) Erfinder: Griessbach, Robert, D-85635 Höhenkirchen-Siegertsbrunn (DE); Kuffner, Walter, D-80809 München (DE)

(56) Entgegenhaltungen:
- EP-A- 0 525 979
- EP-A- 0 628 456
- US-A- 5 247 279
- US-A- 5 285 186
- US-A- 5 381 128

## Beschreibung

Die Erfindung bezieht sich auf eine Sicherheitseinrichtung für Kraftfahrzeuge nach dem Oberbegriff des Anspruchs 1.

Übliche Sicherheitseinrichtungen besitzen eine Kopplung zwischen EWS und FBS in der Weise, daß im Schließzustand der Kraftfahrzeug-Verschlüsse die EWS nicht deaktivierbar ist. Da die FBS auch unbeabsichtigt betätigbar ist, in dem ein Schließ- bzw. Sicherungssignal, üblicherweise drahtlos, abgegeben werden kann, führt dies zu einer Komforteinbuße für den Kraftfahrzeugbenutzer. Da die Abgabe des Fernbedienungssignals auch dann möglich ist, wenn der Fahrzeugbenutzer sich anschickt das Kraftfahrzeug in Betrieb zu nehmen und den Motor zu starten, gerät der Fahrzeugbenutzer dann möglicherweise in Panik, da er sich in einem gesicherten Fahrzeug befindet, das sich nicht in Betrieb nehmen läßt.

Der Erfindung liegt die Aufgabe zugrunde, eine Sicherheitseinrichtung der eingangs genannten Art zu schaffen, bei der es möglich ist, das Kraftfahrzeug auch dann ordnungsgemäß in Betrieb zu nehmen, wenn die EWS wirksam ist.

Die Erfindung löst diese Aufgabe durch die kennzeichnenden Merkmale des Patentanspruchs 1.

Wird die ordnungsgemäße Inbetriebnahme des Kraftfahrzeugs erkannt, so wird diese Inbetriebnahme durchführbar. Das EWS wird hierzu deaktiviert. Dies erfolgt unabhängig davon, ob sich die Kraftfahrzeug-Verschlüsse im (gesicherten) Schließzustand befinden. Da die ordnungsgemäße Inbetriebnahme des Kraftfahrzeugs erfolgen kann, wenn der Fahrzeugbenutzer das Kraftfahrzeug auch ordnungsgemäß geöffnet hat, bleibt die durch das EWS bestehende Sicherheit weiter bestehen. Die Inbetriebnahme des Kraftfahrzeugs ist für den unrechtmäßigen Benutzer dann nicht möglich, da das EWS den Benutzer nicht als berechtigt identifiziert und damit weiterhin aktiviert bleibt.

Die Ausgestaltung der Erfindung ist auf verschiedene Weise möglich. So kann der Fahrzeugbenutzer beispielsweise optisch oder akustisch auf den Bedienungsfehler hingewiesen werden und beispielsweise zwar ein Starten des Antriebsaggregats, nicht jedoch ein Wegfahren ermöglicht werden. Hierzu können beispielsweise gesonderte Maßnahmen vorgesehen sein, die die Abfahrt des Kraftfahrzeugs so lange verhindern, bis durch den Fahrzeugbenutzer ein Entsicherungs- bzw. Entriegelungssignal an die FBS abgegeben werden.

Die Abgabe des Entsicherungs- bzw. Entriegelungssignal kann aber auch selbsttätig durch das EWS erfolgen. Ein irgendwie gearteter Hinweis an den Fahrzeugbenutzer kann dann entfallen. Der Bedienungsfehler wird damit "stillschweigend" aufgehoben.

Um die ordnungsgemäße Funktion für das Anlassen des Antriebsaggregats sicherzustellen, kann ein ggf. durchgeführter Entriegelungsvorgang der Fahrzeug-Verschlüsse zeitlich getrennt vom Anlaßvorgang ablaufen. Damit ist die ordnungsgemäße Durchführung des Anlaßvorgangs einerseits und des Entriegelungsvorgangs andrerseits sichergestellt. Damit läßt sich eine Komforteinbuße für den Fahrzeugbenutzer, die aus einer möglichen Fehlbedienung des FBS resultiert, beseitigen.

## Patentansprüche

1. Sicherheitseinrichtung für Kraftfahrzeuge mit einer elektronischen Wegfahrsperre (EWS), die bei ordnungsgemäßer Inbetriebnahme des Kraftfahrzeugs deaktiviert wird und mit einer Fernbedienungssteuerschaltung (FBS) zusammenarbeitet, mit der Verschlüsse des Kraftfahrzeugs in den (gesicherten) Schließzustand gebracht werden, dadurch gekennzeichnet, daß die Deaktivierung des EWS auch im Schließzustand der Verschlüsse möglich ist.

2. Sicherheitseinrichtung nach Anspruch 1, dadurch gekennzeichnet, daß bei Deaktivierung des EWS ein Entsicherungssignal an die FBS ausgegeben wird.

3. Sicherheitseinrichtung nach Anspruch 2, dadurch gekennzeichnet, daß bei Deaktivierung des EWS auch ein Entriegelungssignal an die FBS ausgegeben wird.

4. Sicherheitseinrichtung nach Anspruch 2 oder 3, dadurch gekennzeichnet, daß die Entsicherung und/oder Entriegelung der Kraftfahrzeug-Verschlüsse im Anschluß an das Durchführen eines Startvorgangs vorgenommen wird.

## Claims

1. An anti-theft device for motor vehicles with an electronic drive-away prevention (EWS), which is deactivated on the normal start-up of the motor vehicle and which works together with a remote operating control circuit (FBS), with which the locks of the motor vehicle are brought into the (secured) locked condition, characterised in that the deactivation of the EWS is possible also in the closed condition of the locks.

2. An anti-theft device according to Claim 1, characterised in that on deactivating the EWS a non-secure signal is transmitted to the FBS.

3. An anti-theft device according to Claim 2, characterised in that on deactivating the EWS an unlocking signal is also sent to the FBS.

4. An anti-theft device according to Claim 2 or Claim 3, characterised in that non-securing or unlocking of the motor vehicle locks is undertaken in connection with the performance of a starting process.

## Revendications

1. Dispositif de sécurité antivol pour des véhicules automobiles, comportant un blocage électronique de marche (EWS) désactivé en cas de mise en fonctionnement conforme du véhicule automobile et coopère avec un circuit de télécommande (FBS), qui met les fermetures du véhicule automobile en état de fermeture (assurée),
caractérisé en ce que
la désactivation de l'EWS est également possible lorsque les fermetures sont à l'état fermé.

2. Dispositif de sécurité antivol selon la revendication 1,
caractérisé en ce qu'
un signal de mise hors sécurité est envoyé au FBS en cas de désactivation de l'EWS.

3. Dispositif de sécurité antivol selon la revendication 2,
caractérisé en ce qu'
un signal de déverrouillage est également envoyé au FBS en cas de désactivation de l'EWS.

4. Dispositif de sécurité antivol selon la revendication 2 ou 3,
caractérisé en ce que
la mise hors sécurité et/ou le déverrouillage des fermetures du véhicule sont effectuées suite à l'exécution d'un processus de démarrage.
